# EUROPEAN PATENT APPLICATION

(11) **EP 1 389 876 A1**
(43) Date of publication of application: **18.02.2004**
(21) Application number: 02255621.1
(22) Date of filing: 12.08.2002
(51) Int. Cl.: H04N 9/04

(54) **Colour image sensor with hexagonal shaped pixels**

(71) Applicant: STMicroelectronics Limited, Marlow, Buckinghamshire SL7 1YL (GB)
(72) Inventor: Purcel, Matthew, Edinburgh EH16 6DN (GB); Smith, Stewart, Edinburgh EH10 4HA (GB); Hurwitz, Jonathan Ephriam David, Edinburgh EH13 0JT (GB)
(74) Representative: Cooper, John

(57) **Abstract**

A colour image sensor has an image array (10) in which a pixel of a given colour (R,G,B) is surrounded by pixels of other colours in a quasi-hexagonal manner. Colour values for a given pixel are derived from the actual value of that pixel's colour and average values of the neighbouring pixels of other colours. These values are derived by reading pixel values from three adjacent lines into three channels (12,14,16) each comprising delay lines (20,22,34,36) as temporary storage means, the averaging being performed by summing (24,28) the relevant data from the channels (12,14,16). Bayer-type patterns and four colour patterns of pixels are also described.

## Description

This invention relates to a method and apparatus for processing images derived from a solid state, colour image sensor.

It is conventional to derive images from an image sensor having an image plane in the form of an array of colour-specific pixels. The colours are typically red, green and blue (RGB) and the following description will refer to the colours as RGB, but other sets of primary colours may in principle be used; for example, it is also known to use magenta-cyan-yellow-green. Typically, each pixel has a photodiode and associated circuitry, with the photosensitive part being overlaid by a colour filter layer.

The quality of reproduction from such an image sensor has limitations, since each pixel detects only a single colour. To mitigate this, it is known to process the signals in such a manner as to estimate for a pixel of a given colour the value of the other two colour components at that location. This is done by manipulating the detected values of the other two colours at adjacent pixels: see for example US Patent 4,837,614. However, known methods of doing this are cumbersome and require a relatively large amount of hardware or processing power.

It is also known to use the so-called Bayer arrangement in which green pixels predominate, typically having rows of alternately green and blue pixels interleaved with rows of alternately green and red pixels. This compensates for the relatively poor response to green in typical solid state sensors, but signal processing is still required to estimate RGB values for all pixels.

A further limitation on the image quality derived from known image sensors arises from the fact that the pixels are arranged in a rectangular array. A more efficient arrangement would be to provide an image plane composed of hexagonal pixels: see for example US Patent 4,441,123. However, to date it has not been possible to achieve a practicable means of fabricating an array of hexagonal pixels without unacceptably large gaps between pixels or uneconomic fabrication steps.

The present invention provides a method of deriving video information from an image sensor having an image plane divided into pixels sensitive to different ones of a set of colours, the method comprising deriving colour values for a given pixel by taking the actual value of the colour signal for that pixel and the average value of each of the other colours in said set from pixels hexagonally surrounding the given pixel.

From another aspect, the invention provides a solid state image sensor having an image plane forming an array of pixels each of which is sensitive to one of a set of colours, in which the pixels are so arranged that a given pixel is hexagonally surrounded by six pixels which include at least one pixel sensitive to each of the other colours in the set.

A further aspect of the invention resides in an image sensor apparatus comprising a solid state image sensor having an image plane forming an array of pixels each of which is sensitive to a given colour from a set of colours, and a circuit for reading out pixel values, said circuit comprising a plurality of output channels for receiving successive pixel values from each of adjacent lines of the array, each channel comprising a plurality of delay lines whereby a plurality of pixel values are available in each channel, and summing circuits each of which is arranged to sum the values of one colour of pixels immediately adjacent a given pixel.
The image sensor is preferably as defined in the preceding paragraph.

Other preferred features of the present invention are defined in the claims.

Embodiments of the invention will now be described, by way of example only, with reference to the drawings, in which:
Figure 1 shows an idealised layout of RGB pixels for use in one embodiment of the present invention;
Figure 2 is a similar pixel layout for a four colour system;
Figure 3 shows a layout equivalent to Figure 1 using physical pixels which can be achieved in practice;
Figures 4A and 4B illustrate the geometry of hexagonal and rectangular arrays, respectively, in greater detail;
Figure 5 is a schematic block diagram of a camera using the array of Figure 3;
Figure 6 shows time charts for two steps in use of the circuit of Figure 5;

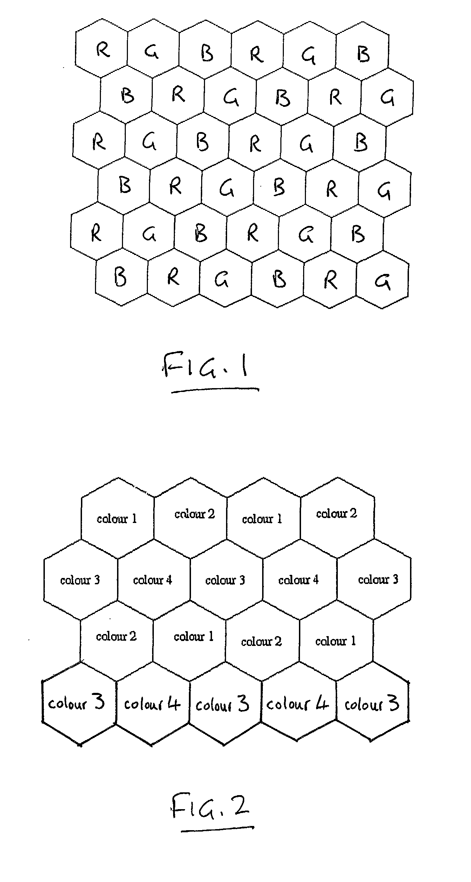

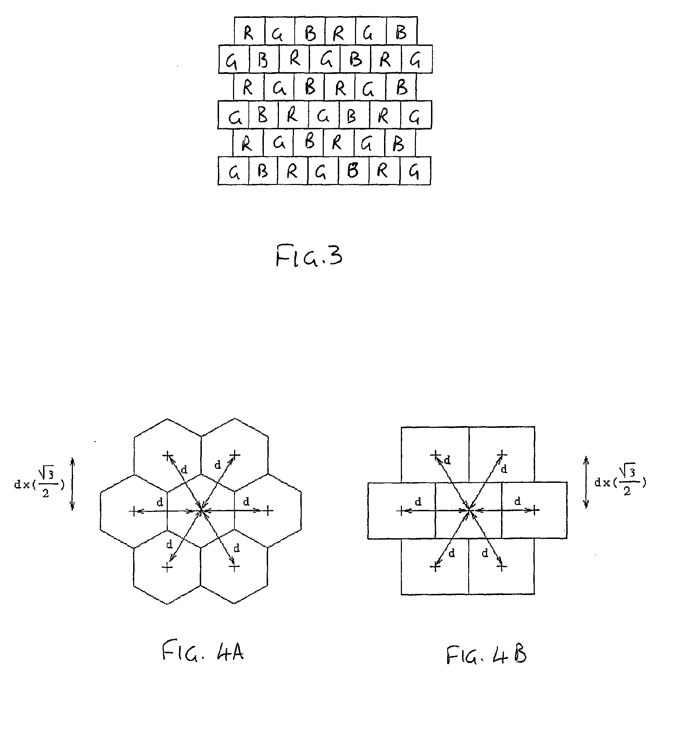

Referring to Figures 1 to 6, the ideal arrangement of pixels for use in the present invention would be an hexagonal array with adjacent pixels touching, and with the colour filters arranged in such a way that a pixel of a given colour is surrounded by pixels of other colours. Figure 1 shows this for an RGB system, each red pixel being surrounded by three blue and three green pixels, and correspondingly for the other colours. Figure 2 shows a four-colour system, in which each pixel of colour 1 is surrounded by two pixels of colour 2, two of colour 3 and two of colour 4, and correspondingly for the other colours.

Hexagonal pixel arrays of this nature are difficult if not impossible to achieve in practice, whereas the fabrication of rectangular pixels is well understood. Figure 3 illustrates the manner in which a pseudo-hexagonal array can be formed from rectangular pixels.

Figure 4 shows in greater detail the optimum proportions of the pixels in the array of Figure 3. In a hexagonal array (Figure 4A), the centre of any pixel is spaced from the centre of each of its neighbours by a distance d. The optimum form of the rectangular equivalent (Figure 4B) is to have the centre of area of any given pixel spaced from the centre of area of each neighbour by a constant distance d. Geometrically, this infers that each pixel has a length d and a height d*0.5√3, or 0.866d.

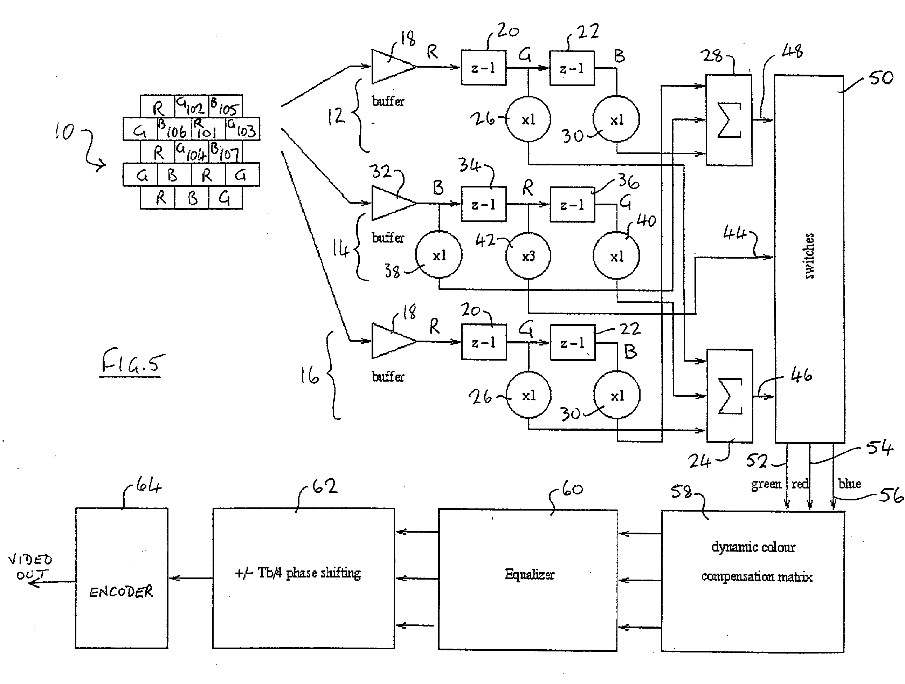

Turning to Figure 5, a photosensor array 10 of the form shown in Figure 3 and Figure 4B is connected such that three rows at a time are read out to three channels 12, 14 and 16, the columns being advanced simultaneously under the control of a common clock pulse.

The first and third channels 12 and 16 each comprise a buffer 18 and two delay lines 20 and 22. The outputs of the delay lines 20 are taken to a first summer 24 via respective buffer amplifiers 26 with an amplification factor of unity. The outputs of the delay lines 22 are taken to a second summer 28 via respective buffer amplifiers 30 with an amplification factor of unity.

The centre channel 14 comprises a buffer 32 and two delay lines 34 and 36. The output of the buffer 32 is taken to the second summer 28 via a buffer amplifier 38 with an amplification factor of unity, and the output of the second delay line 36 is taken to the first summer 24 via a buffer amplifier 40 with an amplification factor of unity. The output of the first delay line 34 of channel 14 is passed via a buffer amplifier 42 with an amplification factor of 3 to an output 44.

The summers 24 and 28 provide the sum of their input signals to outputs 46 and 48 respectively.

Each of the delay lines 20, 22, 34, 36 has a delay of one clock pulse. Thus the output lines from each channel will give the values of successive pixels. In Fig. 5 this is shown by the symbols R, G and B at relevant points. For the point in time shown, the output at 44 is the value of the red pixel 101 in the array 10, multiplied by 3. The output of the first summer at 46 is the sum of the three green pixels 102, 103, 104. The output of the second summer 28 is the sum of the three blue pixels 105, 106, 107.

The outputs 44, 46, 48 at this time therefore define the RGB values of the pixel 101 in terms of the actual red value and the mean of the surrounding green and blue values, all times 3. At the next clock pulse, the interpolated red 46 and green 48 values co-sited with the blue value 44 corresponding to pixel 106 in array 10 will be output in similar fashion.

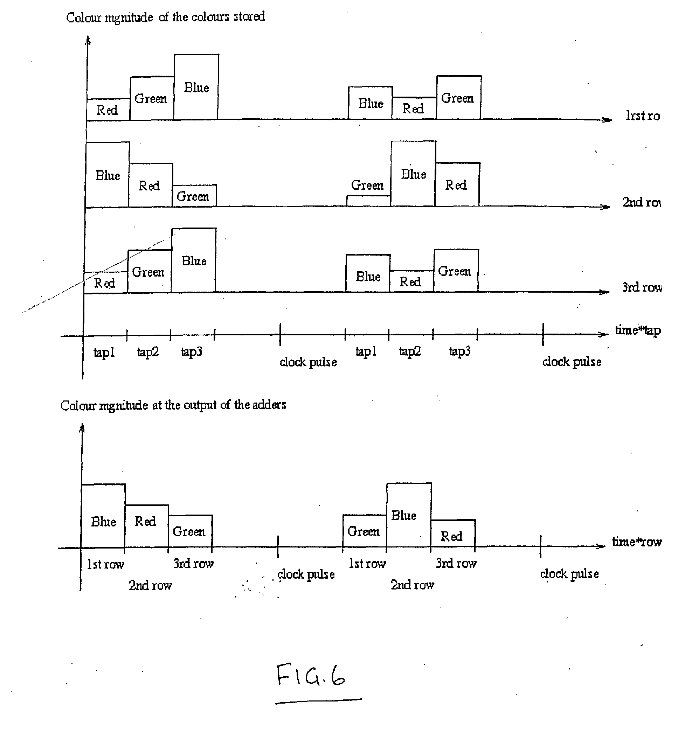

Figure 6 illustrates the timing of this process.

Reverting to Figure 5, a switch matrix 50 is provided by which the output 44, 46, 48 are cyclically connected to green, red and blue output lines 52, 54, 56 respectively.

The camera of Figure 5 contains further circuitry to modify the raw RGB output on the lines 52 - 56.

The signals are first passed through a dynamic colour compensation matrix 58. The narrow bandwidth colour filters used on the individual pixels do not permit perfect colour reconstruction as far as the eye is concerned. The compensation matrix 58 operates to minimise the colour errors. The processing is dynamic to offset the effects of changing lighting.

The signals next pass through an equalizer 60. Up until now, the images processed have been largely low-pass filtered. The equalizer 60 is used to improve the high frequency content of the images.

The next stage is a phase shifter 62. Because of the staggered layout of the pixels in the array 10, each line read in from the array has a physical horizontal offset, relative to the preceding and succeeding lines, of +/-(Ph/2) where Ph is the horizontal pixel pitch. In the example of Figure 5, the red pixel 101 is physically offset from the blue pixels 105 above and 107 below by -Ph/2.

The phase shifter 62 accomplishes sampling-structure conversion from hexagonal to rectangular by adjusting the group delay of an allpass filter, shifting alternating lines by +/-(Ph/4). In the example of Figure 5, the interpolated blue pixel 48 is phase-shifted by +Ph/4.As the lines above and below are phase-shifted by -Ph/4, the relative physical offset of -Ph/2 is removed and alignment is achieved.

This rectangularly-structured RGB is then converted by an encoder 64, for example an ITU-656 encoder, to give a final output in a form suitable for viewing on standard monitors.

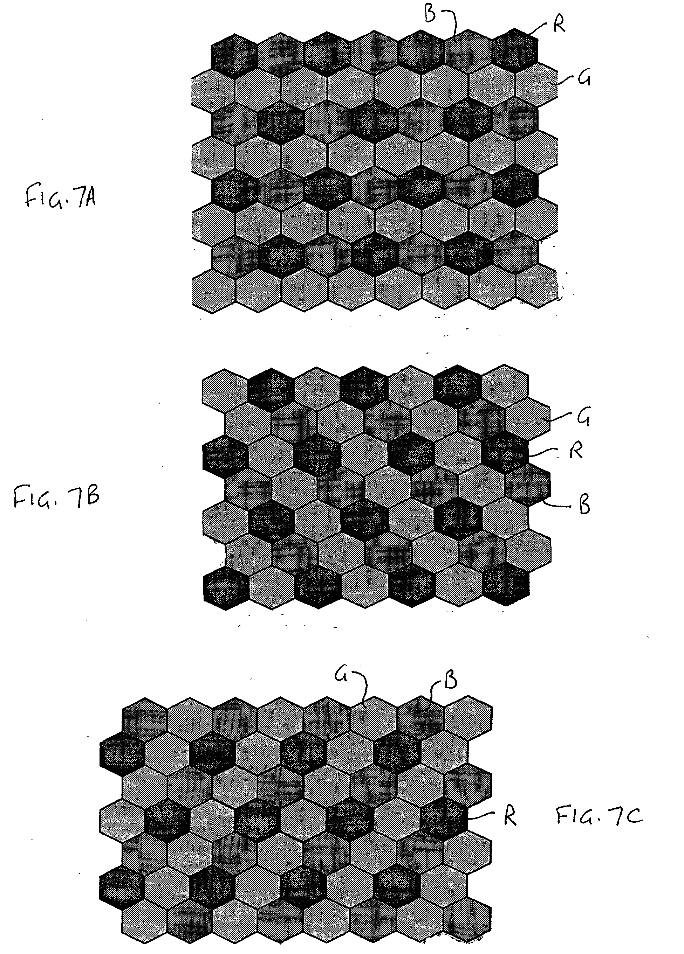

Figures 7 to ** illustrate another embodiment of the invention applied to a Bayer-type pattern. Figures 7A, 7B and 7C show three possible ways of applying a Bayer-type pattern to a hexagonal array. In each of these, as in the normal rectangular Bayer pattern, the number of green pixels is twice that of red pixels, and the number of green pixels is twice that of blue pixels.

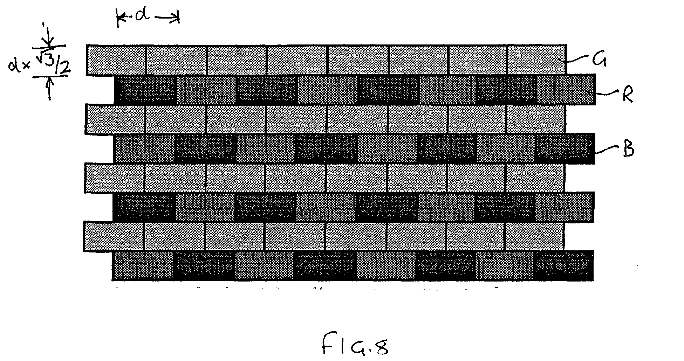

As before, it is not practicable to fabricate a hexagonal pixel array, and a rectangular analogue is used. Figure 8 shows the pattern of Figure 7A altered to rectangular form, and again the optimum height:length ration of 0.866 is used. It will be readily apparent that the patterns of Figures 7B and 7C could be altered to equivalent rectangular forms.

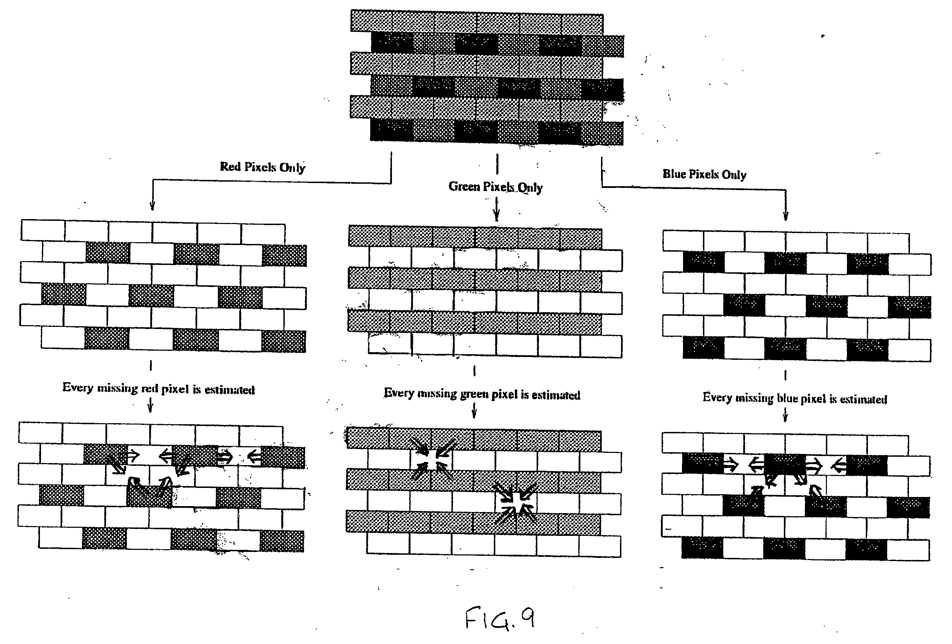

Figure 9 illustrates the principle of reconstructing colour information from the array of Figure 8. For each pixel where no information is present in a given colour, the information is estimated by interpolation from the neighbours which detect that colour; this is indicated by arrows in Figure 9.
The interpolation will typically be done by summing and averaging the neighbouring values.

As in the first embodiment, in order to obtain a standard signal format, it is then necessary to shift alternate rows by +/-(Ph/4) to obtain a rectangular array format, following which equalisation and colour correction may be applied in known fashion.

In the embodiment of Figures 7 to 9, the interpolation may be implemented by a system of delay lines and summers similar to that of the first embodiment, as will be apparent to those in the art without detailed description.

The invention thus provides an image sensor and camera which provide the advantages of a hexagonal pixel array in a simple and practicable manner.

Modifications may be made to the foregoing within the scope of the invention.

## Claims

1. A method of deriving video information from an image sensor having an image plane divided into pixels sensitive to different ones of a set of colours, the method comprising deriving colour values for a given pixel by taking the actual value of the colour signal for that pixel and the average value of each of the other colours in said set from pixels hexagonally surrounding the given pixel.

2. A method according to claim 1, in which said average values are derived by reading out pixel values simultaneously from a plurality of lines, storing successive values for each line, and adding stored values of the same colour from adjacent lines.

3. A method according to claim 1 or claim 2, in which equal numbers of pixels are sensitive to each of the set of colours.

4. A method according to claim 1 or claim 2, in which the set of colours is red, green and blue, and in which the number of pixels sensitive to green is twice the number of pixels sensitive to each of red and blue.

5. A method according to any preceding claim, in which alternate lines of output colour signals are phase shifted relative to each other to define a rectangular row and column format.

6. A solid state image sensor having an image plane forming an array of pixels each of which is sensitive to one of a set of colours, in which the pixels are so arranged that a given pixel is hexagonally surrounded by six pixels which include at least one pixel sensitive to each of the other colours in the set.

7. An image sensor according to claim 6, in which the pixels are rectangular and are laterally displaced in successive rows by one-half of the rectangle length.

8. An image sensor according to claim 4, in which each pixel has a length d and a height of d*0.5•3.

9. An image sensor apparatus comprising a solid state image sensor having an image plane forming an array of pixels each of which is sensitive to a given colour from a set of colours, and a circuit for reading out pixel values, said circuit comprising a plurality of output channels for receiving successive pixel values from each of adjacent lines of the array, each channel comprising a plurality of delay lines whereby a plurality of pixel values are available in each channel, and summing circuits each of which is arranged to sum the values of one colour of pixels immediately adjacent a given pixel.

10. Apparatus according to claim 9, in which said image sensor is in accordance with any of claims 6 to 8.

11. Apparatus according to claim 9 or claim 10, further including a matrix switch arranged to cyclically connect each channel to successive ones of a set of colour output lines, one for each colour of the set.

12. Apparatus according to claim 11, in which the signals on said colour output lines are processed by one or more of dynamic colour compensation, frequency equalization, and encoding into a standard video format.

13. Apparatus according to claim 11 when dependent on claim 7, in which the signals on said colour output lines are subjected to phase shifting to produce a rectangular row and column format.
